# EUROPÄISCHE PATENTSCHRIFT

(11) **EP 0 981 464 B1**
(45) Veröffentlichungstag und Bekanntmachung des Hinweises auf die Patenterteilung: **21.07.2004**
(21) Anmeldenummer: 99911712.0
(22) Anmeldetag: 26.02.1999
(51) Int. Cl.: B60R 5/04, B60R 13/01

(54) **ABDECKUNG FÜR EINEN LADERAUMBODEN EINES KRAFTFAHRZEUGS**
COVERING FOR A LOAD FLOOR OF A MOTOR VEHICLE
REVETEMENT POUR LE FOND D'UN COMPARTIMENT DE CHARGEMENT D'UN VEHICULE AUTOMOBILE

(30) Priorität: 12.03.1998 DE 19810714
(43) Veröffentlichungstag der Anmeldung: 01.03.2000
(73) Patentinhaber: BOS GmbH & Co. KG, 73760 Ostfildern (DE)
(72) Erfinder: AMENT, Eduard, D-73773 Aichwald (DE); SEEL, Holger, D-71134 Aidlingen (DE)
(74) Vertreter: Patentanwälte Ruff, Wilhelm, Beier, Dauster & Partner
(86) Internationale Anmeldenummer: PCT/EP1999/001256
(87) Internationale Veröffentlichungsnummer: WO 1999/046145

(56) Entgegenhaltungen:
- WO-A-95/04671
- WO-A-98/08709
- DE-A- 19 645 692
- DE-U- 29 503 311
- DE-U- 29 704 646
- GB-A- 2 115 754
- US-A- 4 673 207
- US-A- 4 877 281
- US-A- 4 890 874
- US-A- 5 110 171
- US-A- 5 378 034
- US-A- 5 570 921

## Beschreibung

Die Erfindung betrifft eine Abdeckung für einen Laderaumboden eines Kraftfahrzeugs nach dem Oberbegriff des Anspruchs 1.

Eine derartige Abdeckung ist aus der US 5 570 921 bekannt. Die dort offenbarte Abdeckung stellt eine Schutzmatte dar, die aus einem Grundteil und mehreren, an diesem Grundteil angebrachten Seitenteilen aufgebaut sind. Die Schutzmatte ist in einer ebenen Ruheposition mit im wesentlichen rechteckiger Flächenform versehen. Die Seitenteile können entlang von Faltlinien gegenüber dem Grundteil rechtwinklig nach oben aufgestellt werden, wodurch sich ein kastenartiger Behälter ergibt. An den Seitenteilen sind Seitenlaschen vorgesehen, die mit Hilfe von Befestigungsmitteln eine Fixierung der Seitenteile in aufgestellter Funktionsposition ermöglichen.

Eine weitere Abdeckung ist für BMW Touring-Personenkraftwagen allgemein bekannt. Die bekannte Abdeckung ist als genopptes Flächengebilde gestaltet, das auf einem Laderaumboden des Personenkraftwagens aufliegt und an seinen Rändern zu einer umlaufenden Seitenwandung und damit zu einem wannenartigen Gebilde hochgezogen ist. Das Flächengebilde ist in sich relativ instabil und wird durch die Auflage auf dem Laderaumboden stabilisiert.

Aus der GB 21 15 754 ist eine Laderaumabdeckung bekannt, die durch Abknicken zusammenhängender und mit Folienscharnieren verbundener Bereiche aus. einem ebenen Ruhezustand in eine aufgestellte Funktionsposition überführt werden kann.

Die US 4 890 874 offenbart eine Laderaumauskleidung aus Karton oder Wellpappe, die für einen einmaligen Gebrauch bestimmt ist und den Laderaum vor mechanischen Beschädigungen durch das geladene Gut schützen soll. Die Laderaumauskleidung weist eine rechteckige Grundfläche auf, wobei Biegelinien und Einschnitte jeweils parallel oder orthogonal zu den Außenkanten der rechteckigen Grundfläche vorgesehen sind.

Die WO 95/04671 offenbart eine Kofferraumauskleidung, die wannenartig gestaltet ist und exakt auf die Randkontur des Kofferraumes abgestimmt ist. Rückseitig weist die Wandung der Kofferraumauskleidung Faltecken auf, die zumindest bis zu einem bestimmten Flüssigkeitsstand eine Wasserdichtheit der Wanne ermöglichen.

In der DE 297 04 646 U1 ist eine Schutzauskleidung für einen Fahrzeugkofferraum beschrieben, die aus einem Wellpappenzuschnitt mit daran angesetzten Seiten-, Vorder- und Rückwänden besteht.

Aus der DE 295 03 311 U1 ist eine Vorrichtung zum Auskleiden von Gepäckräumen bekannt, die mehrteilig gestaltet ist. Die verschiedenen Teile der Vorrichtung sind durch Scharniere miteinander verbunden.

Die WO 98/08709 offenbart eine längenveränderliche Laderaumauskleidung, die an einem vorderen, einem Fahrerhaus des Kraftfahrzeugs zugewandten Stirnende mit Faltecken versehen ist. Das gegenüberliegende, rückseitige Stirnende ist offen oder klappenartig gestaltet.

Aufgabe der Erfindung ist es, eine Abdeckung der eingangs genannten Art zu schaffen, deren Einsatzmöglichkeiten verbessert sind, und die insbesondere in ihrer aufgestellten Funktionsposition eine Wasserdichtheit ermöglicht.

Diese Aufgabe wird durch die Merkmale des Anspruchs 1 gelöst. Dadurch kann das Flächengebilde zum einen als wasserdichte, ebene Abdeckmatte für den Laderaumboden und zum anderen als kastenartiger Behälter eingesetzt werden. Dieser Behälter kann in einfacher Weise aus dem Fahrzeug entfernt und als Transportbehälter verwendet werden. Zudem ist die Abdeckung auch in ihrer als kastenförmiger Behälter gestalteten Funktionsposition wasserdicht gestaltet, so dass auslaufende Flüssigkeiten innerhalb des Behälters nicht aus dem Laderaumboden gelangen können. Eine Verschmutzung des Laderaumbodens durch derart auslaufende Flüssigkeiten ist somit vermeidbar. Die Eckabschnitte sind entweder lediglich längs einer definierten Sollknickstelle flexibel oder aber über ihre gesamte Fläche flexibel gestaltet.

Eine besonders stabile Fixierung wird durch Klettverschlussanordnungen erzielt.

Durch die erfindungsgemäße Lösung wird eine reduzierte Anzahl von Fixiermitteln für die Funktionsposition des Flächengebildes benötigt.

In weiterer Ausgestaltung der Erfindung sind die Seitenteile derart auf die Abmessungen des Mittelteiles abgestimmt und mittels der Faltabschnitte derart beweglich angeordnet, dass die Seitenteile in eine flach auf den Mittelteil zusammengefaltete Kompaktposition überführbar sind. Dadurch werden die Einsatz- und Funktionsmöglichkeiten der Abdeckung und damit des Flächengebildes weiter verbessert, da das Flächengebilde auf eine kompakte Größe zusammenfaltbar und innerhalb oder außerhalb des Fahrzeugs verstaubar ist. In seiner Kompaktposition ist das Flächengebilde zudem einfach und platzsparend transportierbar. Es eignet sich somit insbesondere für größere Einkäufe.

In weiterer Ausgestaltung der Erfindung weist das Flächengebilde zwei Lagen von Kunststofffolien auf, die dicht;miteinander verbunden sind, wobei zwischen die beiden Lagen zumindest abschnittsweise Verstärkungsflächenelemente eingebracht sind. Die Verstärkungsflächenelemente können als Platten oder Leistenelemente gestaltet sein. Vorzugsweise sind die Verstärkungsflächenelemente bruchfest gestaltet, um die Funktionstüchtigkeit des Flächengebildes auch über einen größeren Benutzungszeitraum zu erhalten.

In weiterer Ausgestaltung der Erfindung sind die Faltabschnitte zwischen dem Mittelteil und den Seitenteilen durch Filmscharniere gebildet. Dies ist eine besonders einfache und kostengünstige Gestaltungsmöglichkeit.

In weiterer Ausgestaltung der Erfindung sind in wenigstens zwei einander gegenüberliegenden Seitenteilen Griffaussparungen vorgesehen. Dadurch wird das Tragen des Flächengebildes in seiner Funktionsposition erleichtert.

In weiterer Ausgestaltung der Erfindung erstrecken die Verstärkungsflächenelemente in den Seitenteilen sich l'ediglich über einen Teil der Höhe der Seitenteile, wobei die Verstärkungsflächenelemente derart dimensioniert sind, dass sie in der zusammengelegten Kompaktposition in einer gemeinsamen Ebene nebeneinander positioniert sind. Dadurch weist das Flächengebilde in der zusammengelegten Kompaktposition eine weiter reduzierte Höhe auf, d.h. das Flächengebilde ist sehr flach zusammengelegt .

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt in perspektivischer Darstellung eine nicht zur Erfindung gehörenden Ausführung einer Abdeckung in ihrer ausgebreiteten Abdeckposition auf einem Laderaumboden eines Kraftfahrzeugs,
- Fig. 2: die Abdeckung nach Fig. 1 in ihrer ausgebreiteten Abdeckposition,
- Fig. 3: die Abdeckung nach Fig. 2 in einer teilweise aufgestellten Zwischenposition,
- Fig. 4: die Abdeckung nach den Fig. 1 bis 3 in einer als kastenförmiger Behälter aufgestellten Funktionsposition,
- Fig. 5: eine Ausführungform einer erfindungsgemäßen Abdeckung in einer ausgebreiteten Abdeckposition,
- Fig. 6: die Abdeckung nach Fig. 5 in einer teilweise aufgestellten Zwischenposition,
- Fig. 7: die Abdeckung nach den Fig. 5 und 6 in der aufgestellten Funktionsposition,
- Fig. 8: die Abdeckung nach Fig. 7 in einer zusammengelegten Kompaktposition,
- Fig. 9: eine weitere Ausführung einer nicht zur Erfindung gehörenden Abdeckung ähnlich Fig. 7,
- Fig. 10: in einer Draufsicht eine weitere Ausführung einer nicht zur Erfindung zähkenden Abdeckung in ihrer ausgebreiteten Abdeckposition,
- Fig. 11: in vergrößerter, perspektivischer Darstellung die Abdeckung nach Fig. 10 in ihrer aufgestellten Funktionsposition,
- Fig. 12: eine weitere Ausführungsform einer erfindungsgemäßen Abdeckung in einer zu einem Behälter aufgestellten Funktionsposition,
- Fig. 13: eine Ausführungsform eines erfindungsgemäßen Faltbehältnisses, das aus drei Abdeckungen nach Fig. 12 zusammengesetzt ist,
- Fig. 14: eine weitere Ausführungsform einer erfindungsgemäßen Abdeckung in der aufgestellten Funktionsposition, und
- Fig. 15: ein weiteres Faltbehältnis ähnlich Fig. 13, das aus zwei Abdeckungen nach Fig. 14 zusammengefügt ist.

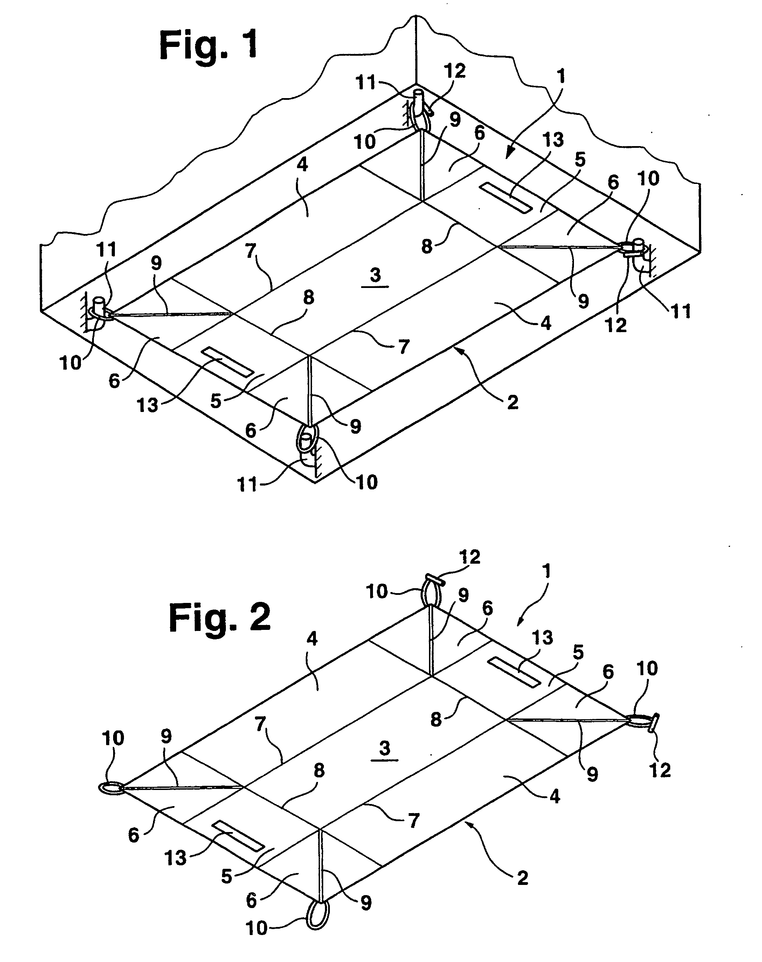

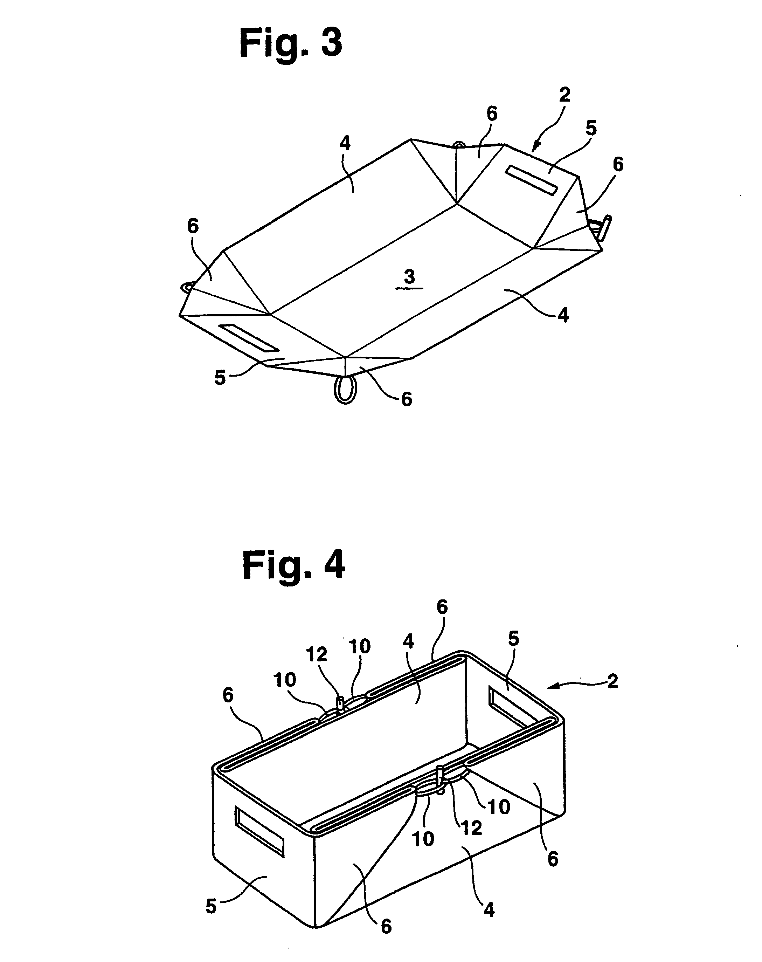

Auf einem Laderaumboden 1 ist gemäß Fig. 1 eine Abdeckung in Form eines einstückigen Flächengebildes 2 in seiner ausgebreiteten Abdeckposition abgelegt. Das ebene Flächengebilde 2 ist durch längs- und querverlaufende Filmscharniere 7, 8, die Faltabschnitte bilden, in einen rechteckigen Mittelteil 3 sowie zwei den Mittelteil 3 auf gegenüberliegenden Längsseiten flankierenden Seitenteilen 4 und zwei den Mittelteil 3 auf gegenüberliegenden Schmalseiten flankierenden Seitenteilen 5 aufgeteilt. Ergänzend sind zwischen den aneinandergrenzenden Seitenteilen 4, 5 insgesamt vier Eckabschnitte 6 vorgesehen. Da auch das Flächengebilde 2 eine rechteckige Außenkontur aufweist und der Mittelteil 3 sich konzentrisch innerhalb des Flächengebildes 2 befindet, weisen die Seitenteile 4 und 5 jeweils die gleiche Breite auf, so daß sie in einer aufgestellten Funktionsposition gemäß Fig. 4 auf gleicher Höhe abschließen. Das Flächengebilde 2 wird durch zwei Lagen von Kunststoffolien gebildet, die zwischen sich Verstärkungsflächenelemente in Form von Plattenelementen einschließen. Die verschiedenen Plattenelemente, die vorzugsweise aus einem bruchfesten und leichtgewichtigen Kunststoff oder Metall hergestellt sind, sind auf die Abmessungen des Mittelteiles 3 und der Seitenteile 4, 5 abgestimmt. Im Bereich der Filmscharniere 7, 8 sind die verschiedenen Plattenelemente der Seitenteile 4, 5 und des Mittelteiles 3 voneinander getrennt und die beiden Lagen von Kunststoffolien sind im Bereich dieser Faltabschnitte vorzugsweise durch Verschweißung miteinander verbunden. Die ebenfalls als Faltabschnitte dienenden Eckabschnitte 6 sind beim dargestellten Ausführungsbeispiel nicht durch entsprechende Plattenelemente verstärkt. Die Eckabschnitte 6 sind somit insgesamt flexibel gestaltet. Jeder Eckabschnitt 6 weist jedoch eine durch ein Filmscharnier gebildete, diagonal von den Ecken des Mittelteiles 3 zu den Ekken der Außenkontur des Flächengebildes 2 verlaufende Sollknickstelle 9 auf. Falls bereits die Sollknickstellen 9 eine ausreichende Nachgiebigkeit gewährleisten, können auch die Eckabschnitte 6 ergänzend mit dreieckförmigen Verstärkungsflächenelementen zu beiden Seiten jeder Sollknickstelle 9 versehen sein. Die beiden Lagen der Kunststoffolienzuschnitte sind im Bereich der Außenkontur des Flächengebildes 2 und damit im umlaufenden Randbereich dicht miteinander verschweißt. Die im Bereich der Schmalseiten vorgesehenen kurzen Seitenteile 5 sind mit jeweils einer Griffaussparung 13 versehen.

An jeder Ecke des Flächengebildes 2 ist zudem eine elastisch nachgiebige Schlaufe 10 vorgesehen, die in fahrzeugfeste, hakenförmige Halterungen 11 einhängbar sind, wobei sie zwischen den fahrzeugfesten Halterungen 11 derart gespannt sind, daß das Flächengebilde 2 in seiner Abdeckposition flächig aufgespannt ist.

Wie insbesondere anhand der Figuren 2 bis 4 erkennbar ist, sind zwei gegenüberliegenden Schlaufen 10 zudem Haltestäbe 12 zugeordnet, mittels derer die Schlaufen 10 zusätzlich als Fixiermittel zur Sicherung der Seitenteile 4, 5 sowie der Eckabschnitte 6 in der aufgestellten Funktionsposition nach Fig. 4 dienen. Aufgrund der als Faltabschnitte dienenden Filmscharniere 7, 8, 9 kann das Flächengebilde 2 nämlich aus seiner ausgebreiteten Abdeckposition gemäß Figuren 3 und 4 in eine einen kastenförmigen Behälter bildende Funktionsposition überführt werden. Dazu werden in einfacher Weise die Seitenteile 4, 5 nach oben aufgestellt. Gleichzeitig werden die Eckabschnitte 6 nach innen oder nach außen umgeknickt und paarweise einander zugewandt. Durch ein Einhängen der Haltestäbe 12 in die Schlaufen 10 werden die Eckabschnitte 6 in ihrer überlappenden zusammengelegten Position gegeneinander verspannt, wodurch gleichzeitig auch die Seitenteile 4, 5 gegeneinander fixiert werden. Da das Flächengebilde 2 wasserdicht gestaltet ist und die Eckabschnitte 6 sich in der Funktionsposition ebenfalls bis auf Höhe der Oberkante der Seitenteile 4, 5 erstrecken, wird ein wasserdichter Bodenbereich des als kastenförmiger Behälter gestalteten Flächengebildes 2 geschaffen.

Bei einem nicht dargestellten Ausführungsbeispiel sind die Eckabschnitte 6 ohne definierte Sollknicklinien vollkommen flexibel gestaltet. An der Funktion des Flächengebildes ändert sich im übrigen nichts.

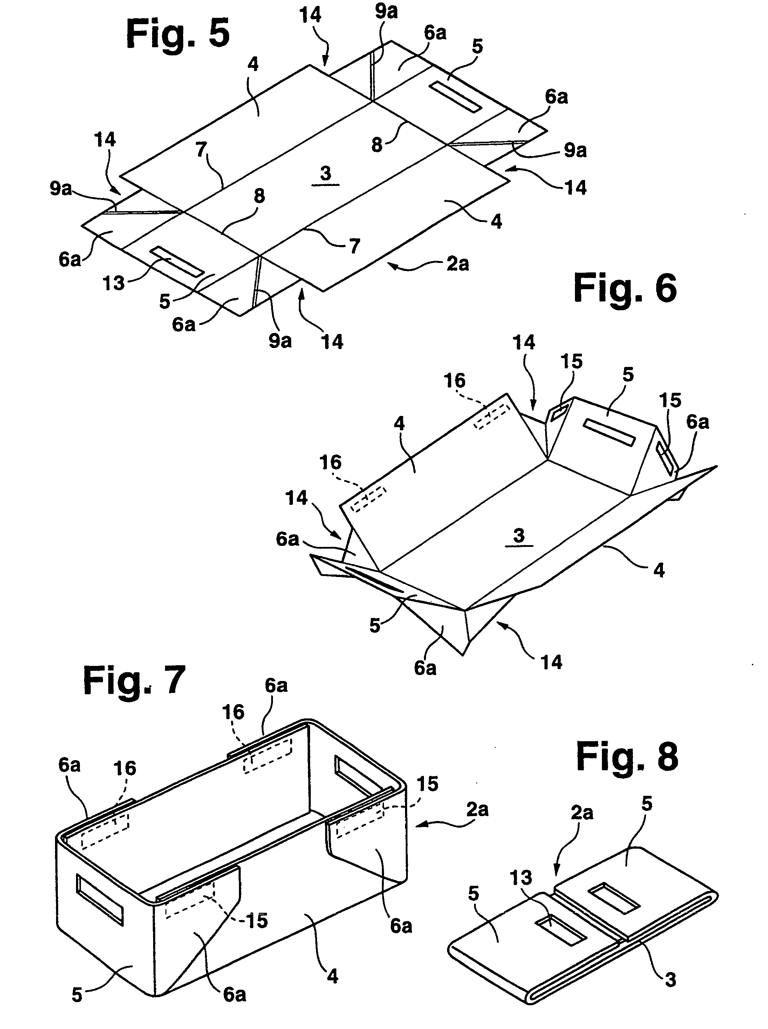

Das als Abdeckung dienende Flächengebilde 2a nach den Fig. 5 bis 8 entspricht im wesentlichen dem zuvor anhand der Fig. 1 bis 4 beschriebenen Ausführungsbeispiel. Gleiche Teile und Abschnitte sind daher mit den gleichen Bezugszeichen versehen. Lediglich die Eckabschnitte 6a und die Art der Fixierung des Flächengebildes 2a in der aufgestellten Funktionsposition nach Fig. 7 sind zum vorhergehenden Ausführungsbeispiel unterschiedlich gestaltet. Die Fixierung der Eckabschnitte 6a an den Seitenteilen 4 und damit die Verspannung der Seitenteile 4, 5 gegeneinander erfolgt beim Ausführungsbeispiel nach den Fig. 5 bis 8 durch Klettverschlußanordnungen 15, 16. Um zu vermeiden, daß aufgrund einer doppelten Überlappung der Eckabschnitte gemäß Fig. 4 eine erhöhte Anzahl von Klettverschlußanordnungen vorzusehen ist, sind die Eckabschnitte 6a auf einer Seite jeder Sollknickstelle 9a mit jeweils einer Aussparung 14 versehen, die auf die Position des jeweiligen Klettverschlußteiles 15, 16 abgestimmt ist. Somit genügt es, daß bei jedem Eckabschnitt 6a der zu der Aussparung 14 benachbarte Flächenteil mit einem Klettverschlußstreifen 15 versehen ist. An den Seitenteilen 4 sind jeweils auf gleicher Höhe jedem Eckabschnitt 6a korrespondierende Klettverschlußteile 16 zugeordnet, wobei die Eckabschnitte 6a im zusammengelegten Zustand derart gefaltet sind, daß der mit dem Klettverschlußteil 15 versehene Teil des Eckabschnittes 6a außen liegt und somit den innenliegenden und durch die Aussparung 14 reduzierten Teil überdeckt. Nach dem Lösen der Klettverschlußanordnungen 15, 16 kann das Flächengebilde 2a auch in eine schmal und flach zusammengelegte Kompaktposition gemäß Fig. 8 zusammengefaltet werden. In dieser Position weist das Flächengebilde 2a lediglich noch Außenabmessungen auf, die den Flächenabmessungen des Mittelteiles 3 entsprechen.

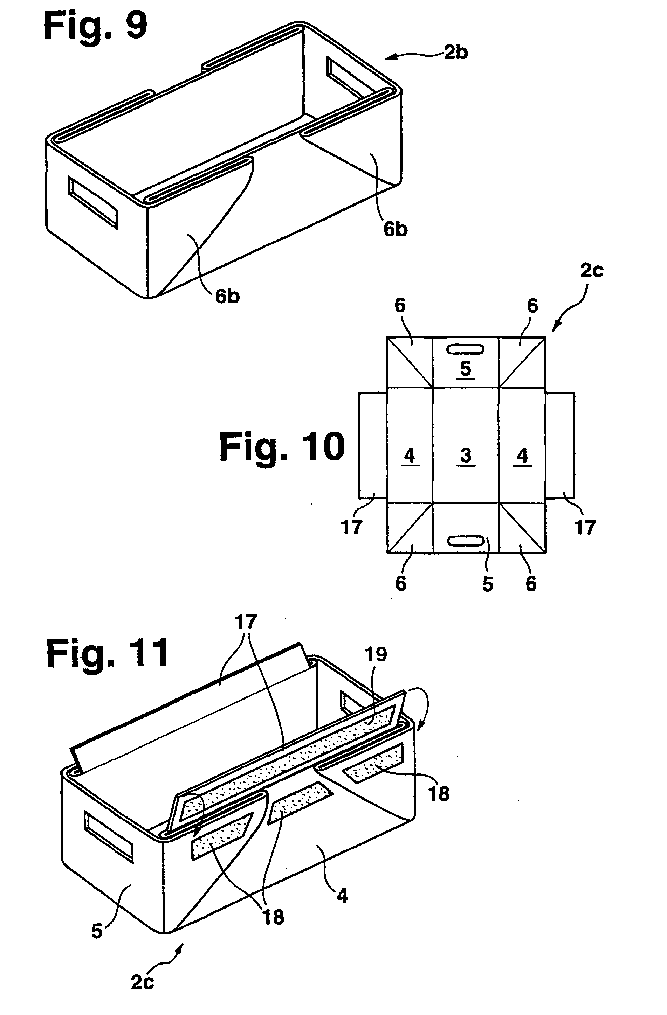

Das Ausführungsbeispiel nach Fig. 9 entspricht im wesentlichen dem zuvor anhand der Fig. 5 bis 8 beschriebenen Ausführungsbeispiel. Bei diesem Flächengebilde 2b sind die Eckabschnitte 6b jedoch nicht mit Aussparungen versehen, sondern vielmehr laschenartig gestaltet. Jedem dreieckförmigen Laschenabschnitt des Eckabschnittes 6b muß somit eine Klettverschlußanordnung zugeordnet sein, um zum einen die beiden Laschenabschnitte miteinander zu verbinden, und zum anderen jeweils den inneren Laschenabschnitt an der Außenseite bzw. der Innenseite des Seitenteiles festzulegen.

Bei einem nicht dargestellten Ausführungsbeispiel, das ähnlich dem Flächengebilde 2a nach den Fig. 5 bis 8 gestaltet ist, sind die Plattenelemente in den Seitenteilen 4, die einander in der zusammengelegten Kompaktposition nach Fig. 8 überlappen, lediglich teilweise mit Verstärkungsflächenelementen versehen. In jedem Seitenteil 4 ist dazu ein leistenförmiges Verstärkungsflächenelement vorgesehen, das sich lediglich über etwa die Hälfte der Höhe jedes Seitenteiles 4 erstreckt und in Abstand zum Mittelteil 3 am oberen Randbereich des Seitenteiles 4 angeordnet ist. Beim Einschlagen der Seitenteile 4 in die zusammengelegte Kompaktposition nach Fig. 8 kommen somit die leistenartigen Verstärkungsflächenelemente parallel nebeneinander zu liegen, wobei der flexible, verbleibende Abschnitt jedes Seitenteiles 4 oberhalb bzw. unterhalb des benachbarten Seitenteiles vorbeigeführt ist. Da die leistenartigen Verstärkungsflächenelemente sich in einer gemeinsamen Ebene befinden, ist das Flächengebilde besonders flach in seiner Kompaktposition zusammenlegbar.

Beim Ausführungsbeispiel nach den Fig. 10 und 11 entspricht das Flächengebilde 2c im wesentlichen dem Flächengebilde 2 nach den Fig. 1 bis 4 oder dem Flächengebilde 2b nach Fig. 9. Das Flächengebilde 2c weist jedoch eine unterschiedliche Fixierung der Seitenteile 4, 5 gegeneinander auf . Hierzu sind an den oberen Randbereichen der gegenüberliegenden Seitenteile 4 Überschlaglaschen 17 vorgesehen, die sich über nahezu die gesamte Länge jedes Seitenteiles 4 erstrecken. Auf einer Seite jeder Überschlaglasche 17 ist ein Klettverschlußstreifen 19 angeordnet, dem an den Außenseiten der Eckabschnitte 6 sowie an den Außenseiten der Seitenteile 4 gemäß Fig. 11 korrespondierende Klettverschlußstreifenabschnitte zugeordnet sind. Nach dem Aufstellen der Seitenteile 4, 5 und dem Umklappen der Eckabschnitte nach außen wird in einfacher Weise jede Überschlaglasche 17 nach außen umgestülpt und auf die Klettverschlußstreifenabschnitte 18 gedrückt. Dadurch wird eine Verspannung und Fixierung der Eckabschnitte 6 mit den Seitenteilen 4 und damit eine Verspannung der Seitenteile 4, 5 gegeneinander erzielt.

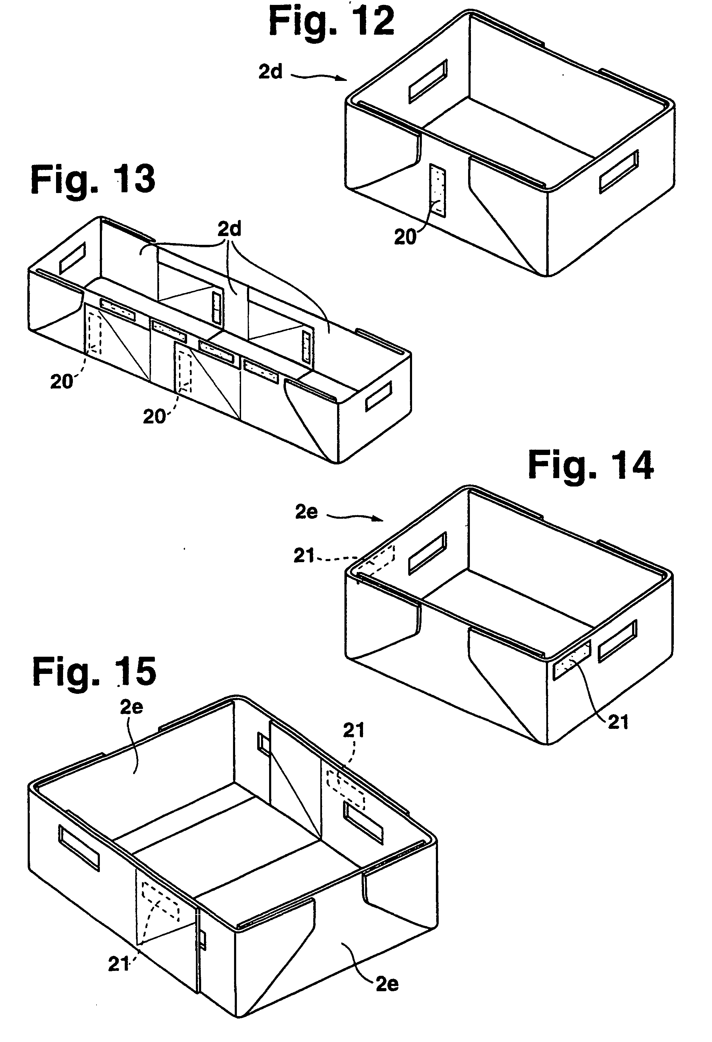

Die Abdeckungen 2d, 2e nach den Fig. 12 und 14 sind im wesentlichen identisch zu der Abdeckung 2a, die in den Fig. 5 bis 7 sowie der zugehörigen Beschreibung erläutert ist. Einziger Unterschied bei den Abdeckungen 2d und 2e ist es, daß zusätzliche Fixiermittel 20, 21 an den breiten bzw. schmalen Seitenteilen vorgesehen sind, die als vertikal bzw. horizontal ausgerichtete Klettstreifen gestaltet sind. Durch diese zusätzlichen Fixiermittel ist es möglich, zwei oder mehr Abdeckungen 2d, 2e gemäß den Fig. 13 und 15 über ihre Schmalseiten (Fig. 13) oder über ihre Breitseiten (Fig. 15) zusammenzufügen, wobei die zusätzlichen Fixiermittel (20, 21) vorteilhaft derart positioniert sind, daß die ohnehin vorhandenen Klettstreifen an den Faltabschnitten der Abdeckungen 2d, 2e an diesen zusätzlichen Fixiermitteln 20, 21 fixiert werden können. Dadurch ist es möglich, lange und schmale Faltbehältnisse gemäß Fig. 13 oder kurze und breite Faltbehältnisse gemäß Fig. 15 je nach dem jeweils benötigten Stauraum zusammenzufügen. Diese Faltbehältnisse werden in entsprechenden Kraftfahrzeug-Laderäumen eingesetzt, wie dies auch für das Ausführungsbeispiel nach den Fig. 5 bis 7 der Fall ist.

## Patentansprüche

1. Abdeckung für einen Laderaumboden eines Kraftfahrzeugs mit einem wasserdichten, einteiligen Flächengebilde, wobei das Flächengebilde (2, 2a, 2b, 2c) flexible Faltabschnitte (6, 6a, 6b, 7, 8, 9, 9a) aufweist, die das Flächengebilde (2 bis 2c) in einen zumindest abschnittsweise formstabilen Mittelteil (3) sowie in mehrere, zumindest abschnittsweise formstabile und den Mittelteil (3) allseitig flankierende Seitenteile (4) aufteilen, die mittels der Faltabschnitte (6, 6a, 6b, 7, 8, 9, 9a) wenigstens zwischen einer mit dem Mittelteil (3) koplanaren Abdeckposition und einer zu dem Mittelteil (3) winklig aufgestellten Funktionsposition beweglich angeordnet sind, und wobei den Seitenteilen (4, 5) Fixiermittel (10, 12; 15, 16; 17 bis 19) zur gegenseitigen lösbaren Festlegung der Seitenteile (4, 5) in der winklig aufgestellten Funktionsposition zugeordnet sind, wobei als Faltabschnitte zwischen den benachbarten Seitenteilen (4, 5) zumindest längs einer Sollknickstelle (9, 9a) flexible Eckabschnitte (6, 6a, 6b) vorgesehen sind, die das Flächengebilde (2 bis 2c) zu einer rechteckigen Flächenform ergänzen **dadurch gekennzeichnet, dass** die Sollknickstelle jedes Eckabschnittes durch, ein Filmscharnier gebildet ist und die Sollknickstellen jeweils diagonal von den Ecken des Mittelteiles zu den Ecken der Außenkontur des Flächengebildes verlaufen, wobei die Eckabschnitte in der Funktionsposition jeweils zu einer dreieckartigen. Falte überlappend zusammengelegt sind, dass die Fixiermittel den Eckabschnitten sowie wenigstens zwei einander gegenüberliegenden Seitenteilen zugeordnet sind, dass als Fixiermittel Haftanordnungen in Form von Druckknopf-, Klettverschlussoder Magnetanordnungen vorgesehen sind, und dass die Eckabschnitte (6a) auf Höhe der Fixiermittel (15, 16) derart mit Aussparungen (14) versehen sind, dass eine in der Funktionsposition außenliegende Lage jedes Eckabschnittes (6a) direkt am jeweiligen Seitenteil (4) festlegbar ist.

2. Abdeckung nach Anspruch 1, **dadurch gekennzeichnet, dass** die Seitenteile (4, 5) derart auf die Abmessungen des Mittelteils (3) abgestimmt und mittels der Faltabschnitte (6, 6a, 6b) derart beweglich angeordnet sind, dass die Seitenteile (4, 5) in eine flach auf den Mittelteil (3) zusammengefaltete Kompaktposition überführbar sind.

3. Abdeckung nach einem der vorhergehenden Ansprüche, **dadurch gekennzeichnet, dass** das Flächengebilde (2 bis 2c) zwei Lagen von Kunststofffolien aufweist, die dicht miteinander verbunden sind, wobei zwischen die beiden Lagen zumindest abschnittsweise Verstärkungsflächenelemente eingebracht sind.

4. Abdeckung nach Anspruch 3, **dadurch gekennzeichnet, dass** die Faltabschnitte (7, 8) zwischen dem Mittelteil (3) und den Seitenteilen (4, 5) durch Filmscharniere (7, 8) gebildet sind.

5. Abdeckung nach einem der vorhergehenden Ansprüche, **dadurch gekennzeichnet, daß** in wenigstens zwei einander gegenüberliegenden Seitenteilen (5) Griffaussparungen (13) vorgesehen sind.

6. Abdeckung nach Anspruch 3, **dadurch gekennzeichnet, dass** die Verstärkungsflächenelemente in den Seitenteilen sich lediglich über einen Teil der Höhe der Seitenteile erstrecken, wobei die Verstärkungsflächenelemente derart dimensioniert sind, dass sie in der zusammengelegten Kompaktposition in einer gemeinsamen Ebene nebeneinander positioniert sind.

7. Abdeckung nach einem der vorhergehenden Ansprüche, **dadurch gekennzeichnet, daß** zur lösbaren Festlegung von wenigstens einer weiteren Abdeckung (2d, 2e) zur Schaffung eines vergrößerten Stauraumes zusätzliche Fixiermittel (20, 21) an den Seitenteilen der Abdeckungen (2d, 2e) vorgesehen sind.

8. Faltbehältnis für die Positionierung in einem Kraftfahrzeug, **dadurch gekennzeichnet, dass** wenigstens zwei Abdeckungen nach einem oder mehreren der vorhergehenden Ansprüche unter Schaffung eines vergrößerten Stauraumes lösbar zusammengefügt sind.

9. Faltbehältnis nach Anspruch 8, **dadurch gekennzeichnet, dass** zur Verbindung der Abdeckungen (2d, 2e) an den Seitenteilen der Abdeckungen (2d, 2e) Fixiermittel (20, 21), insbesondere in Form von Haftanordnungen wie Druckknopf-, Klettverschluss- oder Magnetanordnungen vorgesehen sind.

## Claims

1. Covering for a loading space floor of a motor vehicle, with a watertight, one-part flat-shaped article, wherein the flat-shaped article (2, 2a, 2b, 2c) comprises flexible folding portions (6, 6a, 6b, 7, 8, 9, 9a), which divide the flat-shaped article (2 to 2c) into a centre part (3), which is dimensionally stable at least in portions, and into a plurality of side parts (4), which are dimensionally stable at least in portions, flank the centre part (3) all round and are arranged so that they can move by means of the folding portions (6, 6a, 6b, 7, 8, 9, 9a) at least between a covering position, which is coplanar with the centre part (3), and a functional position, which is set up at an angle to the centre part (3), and wherein fixing means (10, 12; 15, 16; 17 to 19) for mutually securing the side parts (4, 5) in a releasable manner in the angularly set-up functional position are associated with the side parts (4, 5), wherein corner portions (6, 6a, 6b), which are flexible at least along a predetermined bending point (9, 9a), are provided as folding portions between the adjacent side parts (4, 5), which corner portions complete the flat-shaped article (2 to 2c) to form a rectangular flat shape, **characterised in that** the predetermined bending point of each corner portion is formed by a film hinge, and the predetermined bending points in each case extend diagonally from the corners of the centre part to the corners of the outer contour of the flat-shaped article, wherein the corner portions are in each case folded in an overlapping manner in the functional position to form a triangle-like fold, that the fixing means are associated with the corner portions and with at least two mutually opposite side parts, that adherent arrangements in the form of snap fastener, hook and loop fastener or magnetic arrangements are provided as fixing means, and that the corner portions (6a) are provided with recesses (14) level with the fixing means (15, 16) such that a layer of each corner portion (6a) on the outside in the functional position can be directly secured to the respective side part (4).

2. Covering according to Claim 1, **characterised in that** the side parts (4, 5) are adapted to the dimensions of the centre part (3) and arranged so that they can move by means of the folding portions (6, 6a, 6b) such that the side parts (4, 5) can be transferred to a compact position folded flatly onto the centre part (3).

3. Covering according to any one of the preceding Claims, **characterised in that** the flat-shaped article (2 to 2c) comprises two layers of plastics sheets which are closely joined together, wherein flat reinforcing elements are introduced between the two layers at least in portions.

4. Covering according to Claim 3, **characterised in that** the folding portions (7, 8) between the centre part (3) and the side parts (4, 5) are formed by film hinges (7, 8).

5. Covering according to any one of the preceding Claims, **characterised in that** recessed grips (13) are provided in at least two mutually opposite side parts (5).

6. Covering according to Claim 3, **characterised in that** the flat reinforcing elements in the side parts only extend over a part of the height of the side parts, wherein the flat reinforcing elements are dimensioned such that they are positioned side-by-side in a common plane in the folded compact position.

7. Covering according to any one of the preceding Claims, **characterised in that** additional fixing means (20, 21) are provided at the side parts of the coverings (2d, 2e) to secure in a releasable manner at least one further covering (2d, 2e) in order to create an enlarged stowage space.

8. Folding container for positioning in a motor vehicle, **characterised in that** at least two coverings according to any one or more of the preceding Claims are joined together in a releasable manner to create an enlarged stowage space.

9. Folding container according to Claim 8, **characterised in that** fixing means (20, 21), in particular in the form of adherent arrangements such as snap fastener, hook and loop fastener or magnetic arrangements, are provided to connect the coverings (2d, 2e) to the side parts of the coverings (2d, 2e).

## Revendications

1. Revêtement pour le fond d'un compartiment de chargement d'un véhicule automobile, avec une structure plane d'un seul tenant, étanche à l'eau, la structure plane (2, 2a, 2b, 2c) présentant des parties pliantes flexibles (6, 6a, 6b, 7, 8, 9, 9a) qui divisent la structure plane (2 à 2c) en un élément central (3) au moins sectoriellement indéformable ainsi qu'en plusieurs éléments latéraux (4) au moins sectoriellement indéformables et flanquant de tous côtés l'élément central (3), qui sont disposés à déplacement, au moyen des parties pliantes (6, 6a, 6b, 7, 8, 9, 9a), au moins entre une position de revêtement coplanaire avec l'élément central (3) et une position fonctionnelle dressée angulairement par rapport à l'élément central (3), et des moyens d'immobilisation (10, 12 ; 15, 16 ; 17 à 19) étant associés aux éléments latéraux (4, 5) pour la fixation en position mutuelle amovible des éléments latéraux (4, 5) dans la position fonctionnelle angulairement dressée, des parties de coins (6, 6a, 6b), flexibles au moins le long d'une zone d'inflexion privilégiée (9, 9a), étant prévues comme parties pliantes entre les éléments latéraux voisins (4, 5), parties qui complètent la structure plane (2 à 2c) en une forme plane rectangulaire, **caractérisé en ce que** la zone d'inflexion privilégiée de chaque partie de coin est formée par une charnière pelliculaire et les zones d'inflexion privilégiée s'étendent respectivement en diagonale des coins de l'élément central aux coins du contour extérieur de la structure plane, les parties de coins étant, dans la position fonctionnelle, respectivement repliées en recouvrement en un pli triangulaire, **en ce que** les moyens d'immobilisation sont associés aux parties de coins ainsi qu'à au moins deux éléments latéraux mutuellement opposés, **en ce qu'**il est prévu comme moyens d'immobilisation des agencements à adhérence sous la forme d'agencements à boutons-pression, à bande agrippante ou magnétiques, et **en ce que** les parties de coins (6a) sont pourvues, à hauteur des moyens d'immobilisation (15, 16), d'évidements (14) de telle sorte qu'un pli, situé à l'extérieur dans la position fonctionnelle, de chaque partie de coin (6a) peut être fixé en position directement sur l'élément latéral respectif (4).

2. Revêtement selon la revendication 1, **caractérisé en ce que** les éléments latéraux (4, 5) sont adaptés aux dimensions de l'élément central (3) de telle sorte, et au moyen des parties pliantes (6, 6a, 6b) sont disposés à déplacement de telle sorte, que les éléments latéraux (4, 5) peuvent être transférés dans une position compacte repliée à plat sur l'élément central (3).

3. Revêtement selon l'une quelconque des revendications précédentes, **caractérisé en ce que** la structure plane (2 à 2c) présente deux couches de films plastiques qui sont hermétiquement assemblées entre elles, des éléments plans de renforcement étant introduits au moins sectoriellement entre les deux couches.

4. Revêtement selon la revendication 3, **caractérisé en ce que** les parties pliantes (7, 8) entre l'élément central (3) et les éléments latéraux (4, 5) sont formées par des charnières pelliculaires (7, 8).

5. Revêtement selon l'une quelconque des revendications précédentes, **caractérisé en ce que** des évidements de préhension (13) sont prévus dans au moins deux éléments latéraux mutuellement opposés (5).

6. Revêtement selon la revendication 3, **caractérisé en ce que** les éléments plans de renforcement présents dans les éléments latéraux ne s'étendent que sur une partie de la hauteur des éléments latéraux, les éléments plans de renforcement étant dimensionnés de telle sorte qu'ils sont, dans la position compacte repliée, positionnés en juxtaposition dans un plan commun.

7. Revêtement selon l'une quelconque des revendications précédentes, **caractérisé en ce que**, pour la fixation en position amovible d'au moins un revêtement supplémentaire (2d, 2e) destiné à créer un espace de rangement agrandi, des moyens supplémentaires d'immobilisation (20, 21) sont prévus sur les éléments latéraux des revêtements (2d, 2e).

8. Récipient pliant à positionner dans un véhicule automobile, **caractérisé en ce qu'**au moins deux revêtements selon l'une ou plusieurs des revendications précédentes sont assemblés de manière amovible, créant ainsi un espace de rangement agrandi.

9. Récipient pliant selon la revendication 8, **caractérisé en ce que**, pour l'assemblage des revêtements (2d, 2e), des moyens d'immobilisation (20, 21), notamment sous la forme d'agencements à adhérence tels que des agencements à boutons-pression, à bande agrippante ou magnétiques, sont prévus sur les éléments latéraux des revêtements (2d, 2e).
